# DEMANDE DE BREVET EUROPEEN

(11) **EP 2 197 156 A1**
(43) Date de publication de la demande: **16.06.2010**
(21) Numéro de dépôt: 09178618.6
(22) Date de dépôt: 10.12.2009
(51) Int. Cl.: H04L 12/26

(54) **Procédé et dispositif de concentration de messages pour la simulation d'intégration de composants**

(30) Priorité: 10.12.2008 FR 0858444
(71) Demandeur: Airbus Operations, 31060 Toulouse (FR)
(72) Inventeur: Dessertenne, Frank, 31770, COLOMIERS (FR)
(74) Mandataire: Imbert de Tremiolles, Ghislain

(57) **Abrégé**

L'invention a notamment pour objet un procédé et un dispositif de concentration de messages émis par au moins deux émetteurs distincts dans un réseau de communication auquel sont reliés ces émetteurs et un destinataire des données contenues dans les messages. Après avoir reçu (605, 635) les messages à concentrer, les données contenues dans ces messages sont extraites. Une trame de concentration comprenant les données extraites et au moins une information permettant d'identifier le destinataire est alors construite (620) et émise (650). La taille du message de concentration est inférieure à la taille maximale des paquets de données échangés dans ledit réseau de communication.

## Description

La présente invention concerne la simulation d'intégration de composants et plus particulièrement un procédé et un dispositif de concentration de messages échangés dans un réseau de communication, comprenant des équipements pourvus de cartes d'extension, utilisé pour la simulation d'intégration de composants.

La simulation de l'intégration de composants dans un véhicule, en particulier dans un aéronef, est notamment utilisée pour assurer le développement et l'intégration des systèmes électroniques et/ou informatiques embarqués dans celui-ci.

Ainsi, l'intégration de composants dans des véhicules fait l'objet de simulations selon lesquelles des dispositifs d'entrée/sortie, ou cartes d'entrée/sortie, sont utilisés comme interface entre les composants réels du véhicule, tels que, par exemple, des calculateurs, des capteurs et des actionneurs, et un environnement de simulation comprenant généralement un ou plusieurs ordinateurs utilisés pour simuler le comportement du véhicule ou d'une partie de celui-ci. Chaque carte d'entrée/sortie dispose d'un nombre déterminé de voies d'entrée et de voies de sortie.

La complexité de l'environnement de simulation est liée à celle de l'ensemble des composants du véhicule mis en oeuvre. Dans le domaine des aéronefs, il est généralement nécessaire de faire appel à plusieurs ordinateurs ou serveurs pour simuler les différentes situations auxquelles les composants sont susceptibles d'avoir à faire face. Un réseau, permettant la communication entre les différents ordinateurs ou serveurs et les dispositifs d'entrée/sortie, est généralement utilisé.

Le réseau ainsi formé est, par exemple, du type « *switch fabric* », basé sur une architecture commutée, c'est-à-dire que les équipements terminaux chargés de l'émission et de la réception des données s'organisent autour des commutateurs chargés du transport de ces données. Le commutateur est chargé d'émettre en parallèle des requêtes en provenance des ordinateurs ou des serveurs à destination des cartes d'entrée/sortie et des réponses en provenance des cartes d'entrée/sortie vers les ordinateurs ou les serveurs. Une même requête et une même réponse doivent pouvoir être adressées par le commutateur à plusieurs destinataires. Un couple requête/réponse forme un cycle de simulation. Plusieurs couples de requête/réponse peuvent être gérés en parallèle.

Le réseau utilisé peut être basé sur un standard existant, par exemple le standard Ethernet (IEEE 802.3) qui décrit un protocole de réseau local à commutation de paquets.

En raison du nombre de composants mis en oeuvre dans la simulation, il est généralement nécessaire d'utiliser de nombreuses cartes d'entrée/sortie. Celles-ci peuvent être regroupées dans un ou plusieurs équipements comprenant une unité de calcul, généralement utilisée comme interface unique de communication. Un tel équipement, aussi appelé *rack* en terminologie anglo-saxonne, comprend typiquement un bus de communication industriel auquel sont reliées l'unité de calcul, comprenant une interface réseau unique, et une pluralité de cartes d'entrée/sortie, elles-mêmes connectées aux composants dont l'intégration est simulée.

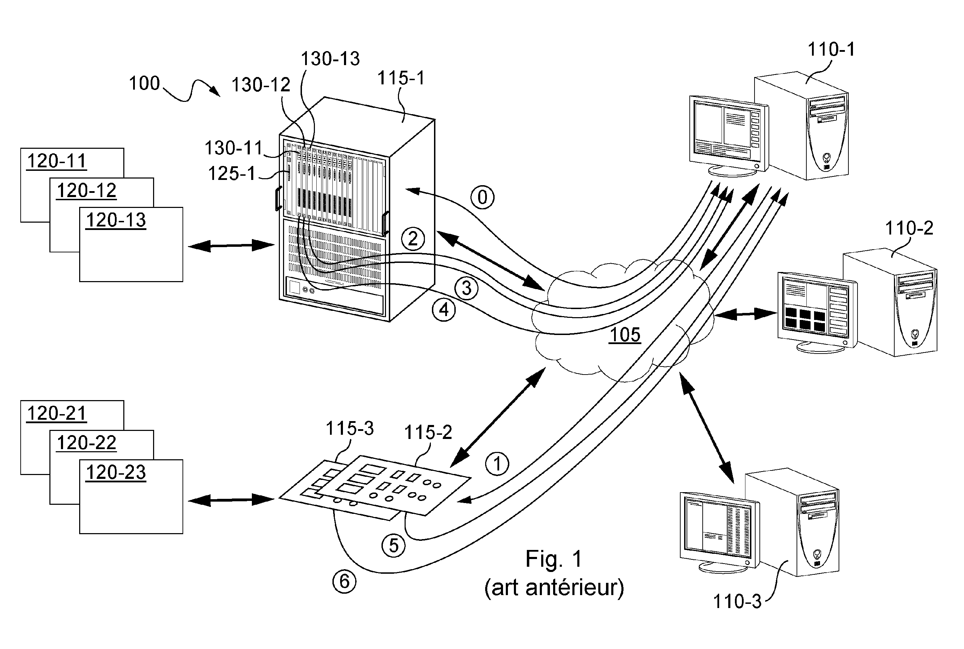

La figure 1 illustre un exemple d'environnement pouvant être utilisé pour simuler l'intégration de composants dans un aéronef. L'environnement 100 comprend ici un réseau 105 auquel sont connectés les ordinateurs ou serveurs 110-1 à 110-3, génériquement appelés ordinateurs dans la suite de la description, un équipement 115-1 comprenant plusieurs cartes d'entrée/sortie et les cartes d'entrée/sortie 115-2 et 115-3. Les composants dont l'intégration est simulée sont ici les composants 120-11 à 120-13 et 120-21 à 120-23, génériquement référencés 120, reliés à l'équipement 115-1 et aux cartes d'entrée/sortie 115-2 et 115-3, respectivement.

A titre d'illustration, l'équipement 115-1 comprend ici une unité de calcul 125-1, aussi appelée CPU (sigle de *Central Processing Unit* en terminologie anglo-saxonne), ainsi que 11 cartes d'entrée/sortie, dont les cartes d'entrée/sortie 130-11, 130-12 et 130-13.

Les outils de test et de simulation de l'intégration des composants 120 sont implémentés sur les ordinateurs 110-1 à 110-3, chaque ordinateur pouvant implémenter un ou plusieurs outils.

Pour tester l'intégration d'un ou de plusieurs composants 120, un opérateur utilise un outil de test implémenté sur l'un des ordinateurs 110-1 à 110-3 pour transmettre des données à un ou plusieurs composants 120 sous forme de requêtes adressées à une ou plusieurs cartes d'entrée/sortie, éventuellement via l'équipement 115-1. Les résultats de test, obtenus sous forme de réponses aux requêtes, sont analysés par l'opérateur qui vérifie ainsi le déroulement de la simulation.

La communication entre les ordinateurs et les cartes d'entrée/sortie peut être conforme au protocole UDP (sigle d'*User Datagram Protocol* en terminologie anglo-saxonne). De façon générale, les ordinateurs utilisent un mode de transmission de type *multicast,* c'est-à-dire qu'un message est adressé simultanément à plusieurs cartes d'entrée/sortie, formant un groupe, tandis que les cartes d'entrée/sortie utilisent un mode de transmission de type *unicast,* c'est-à-dire un mode de communication point-à-point, pour répondre aux messages reçus. Chaque ordinateur et chaque carte d'entrée/sortie comprend, de préférence, une adresse unique permettant de l'identifier sur le réseau de communication.

Ainsi, par exemple, l'ordinateur 110-1 peut transmettre un premier message aux cartes d'entrée/sortie 130-11, 130-12 et 130-13 et un second message aux cartes d'entrée/sortie 115-2 et 115-3, comme illustré par les références ⓪ et ①. En réponse à ces deux messages, l'ordinateur 110-1 reçoit cinq messages distincts de chacune des cartes d'entrée/sortie, comme illustré par les références ② à ⑥.

Cependant, en raison du nombre croissant de cartes d'entrée/sortie utilisées dans les simulations d'intégration de composants, et par conséquent de messages échangés, le temps de latence induit sur les ordinateurs du fait des interruptions générées par les messages reçus doit être pris en considération.

L'invention permet de résoudre au moins un des problèmes exposés précédemment.

L'invention a ainsi pour objet un procédé de concentration d'au moins deux messages émis par au moins deux émetteurs distincts dans un réseau de communication auquel sont reliés lesdits au moins deux émetteurs et au moins un destinataire d'au moins une donnée contenue dans chacun desdits au moins deux messages, le procédé comprenant les étapes suivantes,
- réception desdits au moins deux messages ;
- extraction desdites au moins une donnée contenue dans chacun desdits au moins deux messages ;
- construction d'au moins une trame de concentration comprenant lesdites données extraites et au moins une information permettant d'identifier ledit au moins un destinataire ; et,
- émission de ladite au moins une trame de concentration,
la taille de ladite au moins une trame de concentration étant inférieure à la taille maximale des paquets de données échangés dans ledit réseau de communication.

Le procédé selon l'invention permet ainsi de réduire le nombre de messages transmis audit au moins un destinataire et, par conséquent, le temps de latence induit par les interruptions générées dans la couche réseau du système d'exploitation dudit au moins un destinataire par la réception des messages.

Selon un mode de réalisation particulier, le procédé comprend en outre les étapes suivantes,
- configuration du dispositif mettant en oeuvre le procédé pour mémoriser les identifiants des messages à concentrer et l'adresse dudit au moins un destinataire ; et,
- vérification de la validité desdits au moins deux messages reçus.

Le procédé selon l'invention permet ainsi de filtrer les messages à transmettre audit au moins un destinataire, notamment les messages qui ne seraient pas valides.

De façon avantageuse, le procédé selon l'invention comprend en outre une étape d'ouverture d'une fenêtre de concentration dont la taille est prédéterminée, ladite fenêtre de concentration étant ouverte lors de la réception du premier desdits au moins deux messages, ladite au moins une trame de concentration étant transmise à l'expiration de ladite fenêtre de concentration si au moins l'un desdits au moins deux messages n'est pas reçu.

Le procédé selon l'invention permet ainsi de ne transmettre qu'une partie des messages à transmettre, sous forme d'un message unique, si la totalité des messages à transmettre n'est pas reçue.

Ladite au moins une trame de concentration comprend, de préférence, un indicateur de statut, le procédé comprenant une étape d'évaluation dudit statut. Le message transmis audit au moins un destinataire peut ainsi comprendre des indications particulières, notamment des indications relatives au message émis.

Selon un mode de réalisation particulier, le procédé est mis en oeuvre dans l'un desdits au moins deux émetteurs ou dans un dispositif distinct desdits au moins deux émetteurs et dudit au moins un destinataire. Le procédé selon l'invention peut ainsi être mis en oeuvre dans l'un des émetteurs ou dans un dispositif indépendant.

Toujours selon un mode de réalisation particulier, ledit réseau de communication est un réseau de type Ethernet, lesdits au moins deux messages et ladite au moins une trame de concentration étant conformes au protocole UDP.

L'invention a également pour objet un procédé de simulation de l'intégration d'une pluralités de composants dans un réseau de communication comprenant au moins un système de gestion de simulation et au moins deux cartes d'extension de type entrée/sortie auxquelles est reliée ladite pluralité de composants, ledit procédé comprenant une étape de concentration d'au moins deux messages à destination dudit au moins un système de gestion de simulation, lesdits au moins deux messages étant émis par lesdites au moins deux cartes d'extension, ladite étape de concentration étant conforme au procédé décrit précédemment.

L'invention a aussi pour objet un programme d'ordinateur comprenant des instructions adaptées à la mise en oeuvre de chacune des étapes du procédé décrit précédemment lorsque ledit programme est exécuté sur un ordinateur.

L'invention a aussi pour objet un dispositif comprenant des moyens adaptés à la mise en oeuvre de chacune des étapes du procédé décrit précédemment ainsi qu'un équipement comprenant au moins une carte d'extension de type entrée/sortie, au moins une interface réseau et au moins ledit dispositif.

D'autres avantages, buts et caractéristiques de la présente invention ressortent de la description détaillée qui suit, faite à titre d'exemple non limitatif, au regard des dessins annexés dans lesquels :
- la figure 1 représente un exemple d'environnement pouvant être utilisé pour simuler l'intégration de composants dans un aéronef ;
- la figure 2 illustre la mise en oeuvre d'un concentrateur de messages, conformément à l'invention, dans un réseau de communication utilisé pour la simulation d'intégration de composant tel que celui illustré sur la figure 1 ;
- la figure 3 représente un exemple de messages émis par trois cartes d'entrée/sortie en réponse à un message reçu d'un ordinateur ;
- les figures 4 et 5 représentent des exemples de trames de concentration dont le contenu est basé sur les messages illustrés sur la figure 3;
- la figure 6 illustre un exemple d'algorithme mis en oeuvre dans un concentrateur conforme à l'invention, par exemple dans le concentrateur illustré sur la figure 2 ; et,
- la figure 7 illustre un exemple de dispositif adapté à mettre en oeuvre l'invention ou une partie de l'invention.

De façon générale, l'invention vise à concentrer certains messages émis par des dispositifs distincts, par exemple des cartes d'extension de type entrée/sortie, sur un réseau de communication, à destination d'un seul dispositif, afin de limiter le temps de latence induit sur ce dispositif par les interruptions générées dans les couches réseau du système d'exploitation par la réception de ces messages.

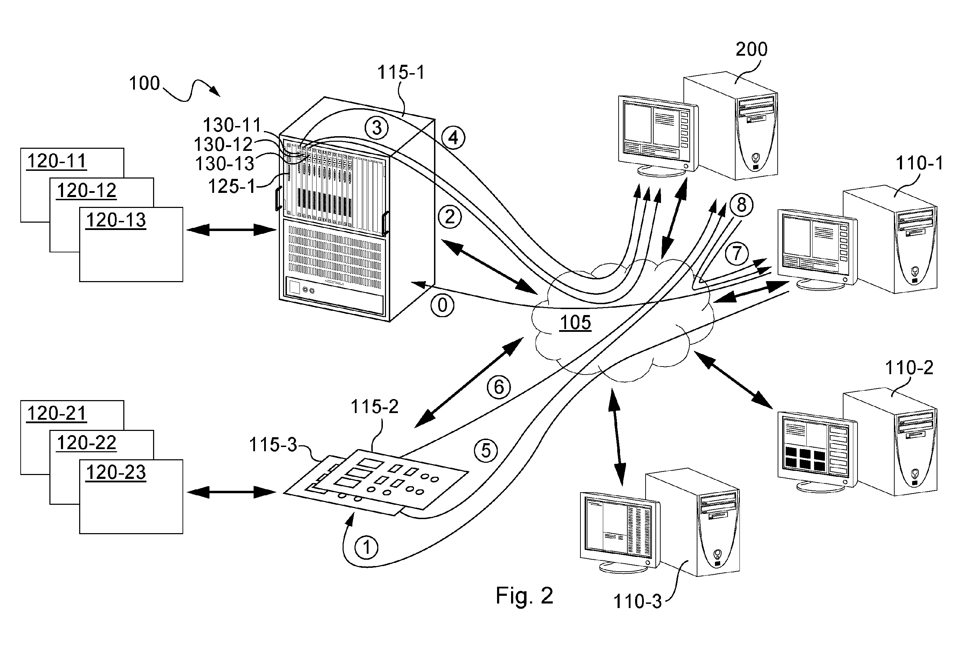

La figure 2 illustre la mise en oeuvre d'un concentrateur 200 de messages, conformément à l'invention, dans un réseau de communication utilisé pour la simulation d'intégration de composant tel que celui illustré sur la figure 1.

Le concentrateur 200 a notamment pour fonction de recevoir certains messages à destination de l'ordinateur 110-1 pour les concentrer en un seul message, appelé trame de concentration, qui est alors retransmis à l'ordinateur 110-1.

Selon un mode de réalisation particulier, la concentration est réalisée pour chaque groupe de cartes d'entrée/sortie, c'est-à-dire pour chaque message de type *multicast* émis.

Ainsi, par exemple, l'ordinateur 110-1 peut transmettre un premier message aux cartes d'entrée/sortie 130-11 à 130-13 et un second message aux cartes d'entrée/sortie 115-2 et 115-3, comme représenté avec les références ⓪ et ①. En réponse à ces deux messages, les cinq messages émis par chacune des cartes d'entrée/sortie sont transmis au concentrateur 200, comme illustré par les références ② à ⑥. Les messages reçus dans le concentrateur 200, à destination de l'ordinateur 110-1, sont concentré dans deux trames de concentration qui sont transmises à l'ordinateur 110-1, comme illustré par les références ⑦ et ⑧.

Afin que les messages émis par les cartes d'entrée/sortie 130-11 à 130-13, 115-2 et 115-3 à destination de l'ordinateur 110-1 soient adressés au concentrateur 200, une étape de configuration particulière est mise en oeuvre. Cette étape permet d'établir un lien entre les identifiants des messages échangés et les adresses, par exemple les adresses IP (sigle d'*Internet Protocol* en terminologie anglo-saxonne), de l'ordinateur 110-1, des cartes d'entrée/sortie 130-11 à 130-13, 115-2 et 115-3 et du concentrateur 200.

Ainsi, à partir de l'identifiant d'un message reçu d'un ordinateur, une carte d'entrée/sortie peut déterminer l'adresse du concentrateur auquel la réponse doit être adressée, ainsi que l'identifiant du message de réponse. De même, à partir de l'identifiant d'un message reçu d'une carte d'entrée/sortie, un concentrateur peut déterminer l'adresse de l'ordinateur auquel la trame de concentration doit être adressée, ainsi que l'identifiant de la trame à utiliser.

De façon générale, le concentrateur 200 a pour objet de concentrer un nombre *n* de messages dont le destinataire du contenu est un ordinateur *i* en un nombre *m* de messages qui sont effectivement transmis à l'ordinateur *i*, le nombre *m* étant inférieur à *n*. Par ailleurs, le nombre *m* est de préférence déterminé de telle sorte que la taille de chacun des *m* messages soit maximale mais inférieure au MTU (sigle de *Maximum Transmission Unit* en terminologie anglo-saxonne) du réseau de communication, c'est-à-dire inférieure ou égale à la taille d'un message au-delà de laquelle le message est fragmenté par les couches de fragmentation du réseau.

Ainsi, le dispositif devant recevoir les *n* messages ne reçoit en réalité que *m* messages. La réception d'un nombre inférieur de messages permet de limiter le nombre d'interruptions générées dans ce dispositif ainsi que le temps de traitement des messages reçus.

Il convient de remarquer que, si le concentrateur peut être un dispositif autonome, connecté au réseau de communication comme illustré sur la figure 2, le concentrateur peut également être associé à des cartes d'entrée/sortie, par exemple sous la forme d'une unité de calcul d'un équipement comprenant des cartes d'entrée/sortie ou être disposé comme interface entre un réseau de communication et un ou plusieurs équipements comprenant des cartes d'entrée/sortie.

La puissance de calcul du concentrateur est, de préférence, déterminée de telle sorte que le temps de concentration des messages soit négligeable par rapport au temps de cycle des échanges de messages entre les dispositifs connectés au réseau de communication.

Selon un mode de réalisation particulier, les messages sont échangés sous forme de messages UDP.

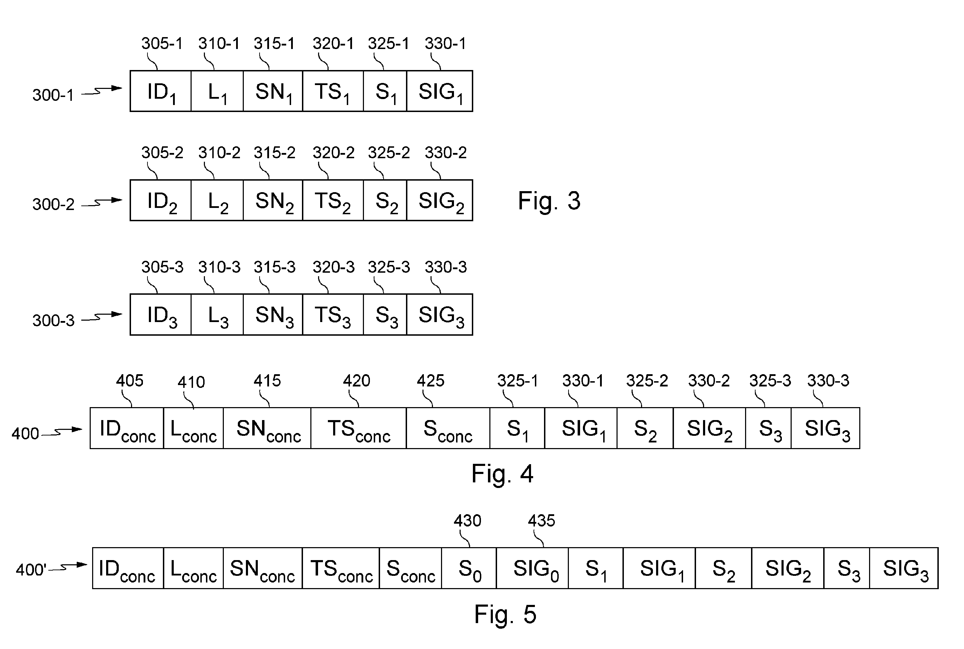

La figure 3 représente un exemple de messages émis par trois cartes d'entrée/sortie en réponse à un message reçu d'un ordinateur. Le message 300-1 est ici émis par une première carte d'entrée/sortie, le message 300-2 par une seconde et le message 300-3 par une troisième.

Chacun des messages comprend un identifiant, noté ID et référencé 305-1, 305-2 et 305-3, utilisé pour identifier le message. Cet identifiant est notamment utilisé pour déterminer la structure de données du message. Par exemple, l'identifiant 100 peut indiquer une structure selon laquelle le message contient les informations suivantes : une vitesse de moteur codée sous forme d'entier sur 32 bits, une altitude codée sous forme d'entier sur 32 bits et un état d'indicateurs de cockpit codé sous forme de booléen sur 8 bits. Bien que le destinataire final du message de réponse soit un ordinateur utilisé pour la simulation, le destinataire est ici, du fait de la configuration de concentration, un concentrateur.

Chaque message comprend également une indication relative à sa longueur, notée L et référencée 310-1, 310-2 et 310-3, un numéro de séquence, noté SN (sigle de *Sequence Number* en terminologie anglo-saxonne) et référencé 315-1, 315-2 et 315-3, ainsi qu'une estampille temporelle, aussi appelée *timestamp* en terminologie anglo-saxonne, notée TS et référencée 320-1, 320-2 et 320-3.

Le numéro de séquence est de préférence incrémenté automatiquement à chaque cycle de simulation, il permet notamment de reconstruire l'évolution de la simulation a posteriori, un cycle de simulation étant une période correspondant à la transmission d'au moins une requête et à la réception de la réponse associée, comme indiqué précédemment. Chaque couple formé par un identifiant et un numéro de séquence est unique dans une séquence de simulation.

L'estampille temporelle est une indication qui permet de déterminer la durée de validité d'un message. S'il n'est pas transmis dans un délai prédéterminé, le message est ignoré. L'estampille temporelle correspond par exemple à l'instant où le message de type *multicast* auquel il est répondu a été transmis. L'estampille temporelle est placée dans le message de requête par le système à l'origine du message, juste avant d'émettre celui-ci (avant l'appel à la fonction d'envoi de la couche UDP). Le destinataire construit alors sa réponse en recopiant cette estampille temporelle dans le message de réponse. Le système à l'origine du message de requête, recevant ce message de réponse, peut alors comparer le temps courant au moment de la réception avec l'estampille temporelle placée dans le corps du message. L'estampille temporelle permet ainsi de rejeter une réponse en fonction de sa durée de vie.

Il convient de remarquer que pour un groupe de cartes d'entrée/sortie pouvant être adressées par un message unique de type *multicast,* l'estampille temporelle et le numéro de séquence des messages émis par chaque carte d'entrée/sortie du groupe sont, par construction, identiques.

Les messages 300-1, 300-2 et 300-3 comprennent également une indication de statut, notée S et référencée 325-1, 325-2 et 325-3, ainsi que les données utiles, aussi appelées *payloads* en terminologie anglo-saxonne, notées SIG et référencées 330-1, 330-2 et 330-3, représentants les signaux mesurés par les cartes d'entrée/sortie.

L'indication de statut peut notamment être utilisée pour préciser le type de message.

Un concentrateur, par exemple le concentrateur 200 illustré sur la figure 2, permet de concentrer les messages 300-1, 300-2 et 300-3 de la figure 3 dans un seul message, par exemple la trame de concentration 400 représentée sur la figure 4.

Comme les messages 300-1, 300-2 et 300-3, la trame de concentration 400 comprend un identifiant 405 permettant notamment d'identifier l'adresse du destinataire des données contenues dans la trame de concentration 400.

La trame de concentration 400 comprend également la longueur 410 de celle-ci, ainsi qu'un numéro de séquence 415 et une estampille temporelle 420. Le numéro de séquence 415 est, de préférence, identique au numéro de séquence 315-1, 315-2 et 315-3 des messages 300-1, 300-2 et 300-3. De même, l'estampille temporelle 420 est, de préférence, identique aux estampilles temporelles 320-1, 320-2 et 320-3 des messages 300-1, 300-2 et 300-3. Cependant, si celles-ci sont différentes, l'estampille temporelle 420 est avantageusement égale à l'estampille temporelle la plus ancienne parmi les estampilles temporelles 320-1, 320-2 et 320-3 des messages 300-1, 300-2 et 300-3.

La trame de concentration 400 comprend en outre un statut 425 qui lui est propre. Il peut être déterminé, par exemple, selon la nature de chacun des messages 300-1, 300-2 et 300-3 contenus dans la trame de concentration 400. Le statut 425 peut également être utilisé pour indiquer une erreur de concentration des messages.

Enfin, la trame de concentration 400 comprend le statut et les données utiles de chacun des messages concentrés, c'est-à-dire ici les statuts 325-1, 325-2 et 325-3 et les données utiles 330-1, 330-2 et 330-3.

Les champs 405 à 425 sont ainsi renseignés par le concentrateur tandis que les autres champs reprennent une partie du contenu des messages concentrés.

Il convient de remarquer que si le concentrateur est associé à une carte d'entrée/sortie ou comprend une carte d'entrée/sortie, une partie du message émis par le concentrateur comprend ses propres données, par exemple le statut 430 et les données utiles 435 de la trame de concentration 400' représentée sur la figure 5.

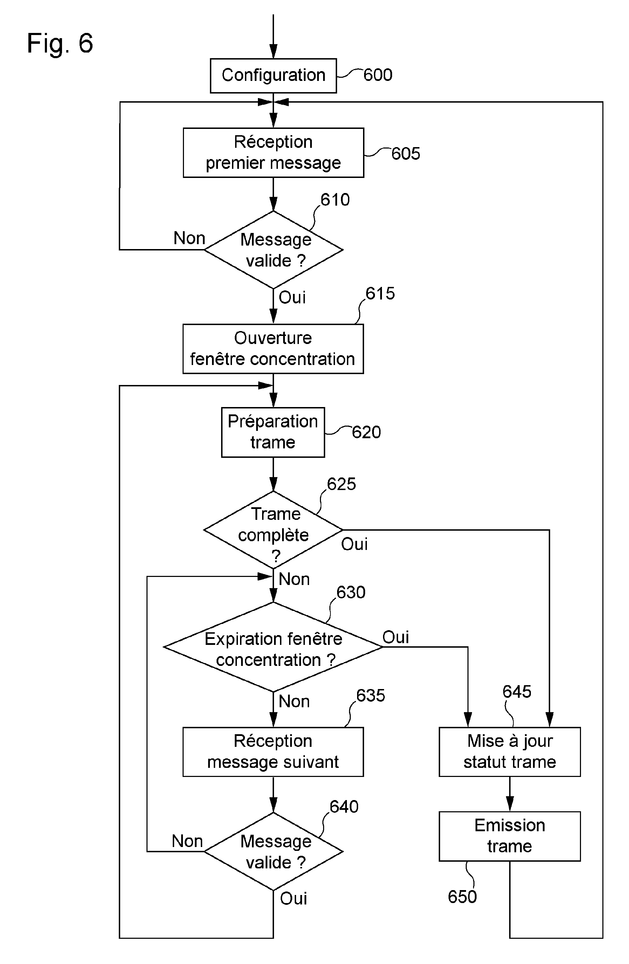

La figure 6 illustre un exemple d'algorithme mis en oeuvre dans le concentrateur, par exemple dans le concentrateur 200 de la figure 2.

Une première étape (étape 600) a pour objet de configurer le concentrateur, ou une instance d'une application de concentration, adapté à concentrer plusieurs messages en une trame de concentration.

Cette étape vise, en particulier, à mémoriser la liste des identifiants des messages à concentrer. Pour chaque message à concentrer, un triplet comprenant l'identifiant du message, l'adresse du noeud émetteur, par exemple l'adresse IP de la carte d'entrée/sortie ou de l'équipement comprenant la carte d'entrée/sortie ayant émis le message, et la longueur des données utiles reçues, par exemple en octets, est mémorisé. Le numéro d'ordre de chaque message paramétré correspond, de préférence, à la position du message à concentrer dans la trame de concentration. Alternativement, cette position peut être mémorisée avec les informations décrites précédemment.

L'adresse réseau du destinataire est également mémorisée dans le concentrateur. Cette adresse comprend avantageusement les adresses IP et MAC (sigle de *Media Access Control* en terminologie anglo-saxonne) afin de s'affranchir de la mise en oeuvre éventuelle du protocole ARP (acronyme *d'Address Resolution Protocol* en terminologie anglo-saxonne) pour limiter le nombre d'échange de messages.

Un identifiant de concentration est également mémorisé dans le concentrateur. Cet identifiant est utilisé comme identifiant de la trame de concentration transmise par le concentrateur. Il est lié à l'adresse du destinataire.

Le concentrateur mémorise également, de préférence, une taille de fenêtre temporelle de concentration permettant de respecter le temps de cycle de la simulation. La taille de la fenêtre de concentration est avantageusement négligeable par rapport au temps de cycle des échanges des messages entre les dispositifs reliés au réseau de communication.

Lorsque le concentrateur est configuré, il peut recevoir et concentrer des messages. Après avoir reçu un premier message (étape 605), un test est effectué pour déterminer si le message reçu est valide (étape 610). Ce test peut notamment consister à vérifier que le triplet constitué de l'identifiant du message, de l'adresse du noeud émetteur et de la taille des données utiles est conforme aux valeurs attendues définies durant l'étape de configuration.

Si le premier message reçu n'est pas valide, les étapes précédentes sont répétées pour identifier un premier message valide.

Au contraire, si le message reçu est valide, la fenêtre de concentration est ouverte (étape 615) en considérant l'instant auquel le premier message valide a été reçu. Comme indiqué précédemment, la taille de cette fenêtre est déterminée durant l'étape de configuration du concentrateur.

Une trame de concentration est ensuite préparée (étape 620). L'identifiant de cette trame est celui mémorisé lors de la configuration du concentrateur. De même, la longueur de la trame est déterminée selon les caractéristiques prédéterminées de la trame et les longueurs des messages à concentrer, mémorisées durant l'étape de configuration du concentrateur. Le numéro de séquence et l'estampille temporelle sont ceux reçus dans le premier message valide. Les données utiles et le statut du message valide reçu sont mémorisés dans la trame de concentration, selon la position déterminée durant l'étape de configuration du concentrateur.

Un test est alors effectué pour déterminer si la trame de concentration est complète (étape 625), c'est-à-dire si le concentrateur a reçu tous les messages à concentrer.

Si la trame de concentration n'est pas complète, un autre test est effectué pour déterminer si la fenêtre de concentration a expiré (étape 630). Cette étape consiste, par exemple, à comparer l'instant auquel est effectué le test avec l'instant d'ouverture de la fenêtre de concentration auquel est ajoutée sa taille.

Si la fenêtre de concentration n'a pas expiré, le concentrateur prend en compte le message suivant reçu (étape 635). A nouveau un test est effectué pour déterminer si le message est valide (étape 640).

A nouveau, ce test peut notamment consister à vérifier que le triplet constitué de l'identifiant du message, de l'adresse du noeud émetteur et de la taille des données utiles est conforme aux valeurs attendues définies durant l'étape de configuration du concentrateur.

De plus, ce test peut être utilisé pour vérifier que le numéro de séquence et l'estampille temporelle sont identiques au numéro de séquence et à l'estampille temporelle de la trame de concentration dont les valeurs initiales correspondent à celles du premier message reçu dans le cycle de simulation.

Si le numéro de séquence et/ou l'estampille temporelle du message reçu ne sont pas identiques au numéro de séquence et à l'estampille temporelle de la trame de concentration, les plus grandes valeurs sont avantageusement utilisées dans la trame de concentration. Le message reçu est ici considéré comme partiellement valide, son statut et ses données utiles peuvent être insérées dans la trame de concentration. Cependant, une indication d'erreur partielle est de préférence générée.

Si le message n'est pas valide, le concentrateur traite le message reçu suivant après avoir vérifié que la fenêtre de concentration n'a pas expiré (l'algorithme retourne à l'étape 630).

Si, au contraire, le message est valide, le concentrateur ajoute le statut du message reçu, ainsi que ses données utiles à la trame de concentration (l'algorithme retourne à l'étape 620) à l'emplacement déterminé lors de l'étape de configuration. Si nécessaire, le numéro de séquence et/ou l'estampille temporelle sont modifiés.

Si la trame de concentration est complète, son statut est mis à jour (étape 645) et la trame de concentration est transmise sur le réseau de communication (étape 650). Le statut de la trame de concentration peut notamment être utilisé pour indiquer le statut du concentrateur et/ou une erreur liée aux messages concentrés, par exemple une erreur sur le numéro de séquence d'un ou de plusieurs messages concentrés.

De même, si la fenêtre de concentration expire, par exemple si un ou plusieurs messages à concentrer n'ont pas été reçus ou si des données du cycle de simulation précédent doivent être ré-émises, le statut de la trame de concentration est mis à jour (étape 645), en indiquant l'expiration de la fenêtre de concentration, et la trame de concentration est transmise sur le réseau de communication (étape 650).

La trame de concentration est ensuite réinitialisée. Le concentrateur peut alors recevoir et traiter les messages des cycles suivants (étape 605).

Bien que, pour des raisons de clarté, les exemples illustrés soient limités à la concentration de plusieurs messages en une trame de concentration, il doit être compris que plusieurs concentrateurs peuvent être utilisés en parallèle pour former simultanément plusieurs trames de concentrations, notamment des trames de concentration liées à des groupes de cartes d'entrée/sortie différents. Les concentrateurs peuvent être des dispositifs matériels distincts, des applications logicielles distinctes et/ou des instances d'applications matérielles.

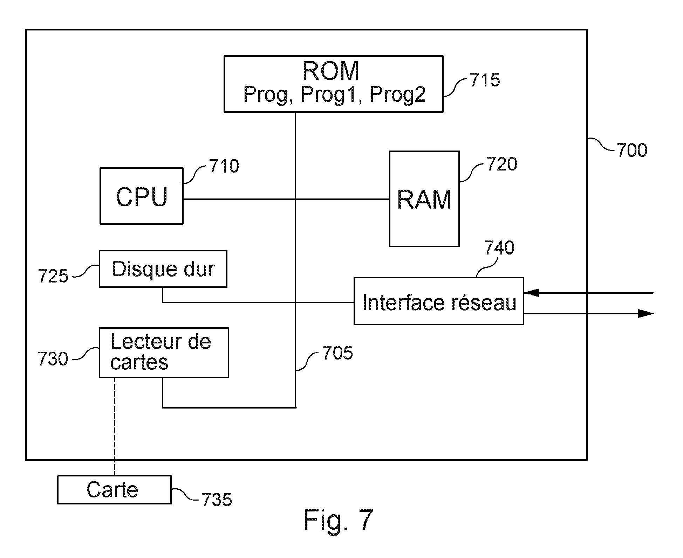

Un concentrateur adapté à mettre en oeuvre l'invention ou une partie de l'invention est illustré sur la figure 7. Le dispositif représenté est de préférence un dispositif standard, par exemple un calculateur, un ordinateur ou un serveur.

Le dispositif 700 comporte ici un bus interne de communication 705 auquel sont reliés :
- une unité centrale de traitement ou microprocesseur 710 (CPU, sigle de *Central Processing Unit* en terminologie anglo-saxonne) ;
- une mémoire morte 715 (ROM, acronyme de *Read Only Memory* en terminologie anglo-saxonne) pouvant comporter les programmes nécessaires à la mise en oeuvre de l'invention ;
- une mémoire vive ou mémoire cache 720 (RAM, acronyme de *Random Access Memory* en terminologie anglo-saxonne) comportant des registres adaptés à enregistrer des variables et paramètres créés et modifiés au cours de l'exécution des programmes précités ;
- une interface de communication 740 adaptée à transmettre et à recevoir des données vers et depuis un réseau de communication, par exemple un réseau de type commuté.

Le dispositif 700 dispose également, de préférence, des éléments suivants :
- un disque dur 725 pouvant comporter les programmes précités et des données traitées ou à traiter selon l'invention ; et
- un lecteur de cartes mémoires 730 adapté à recevoir une carte mémoire 735 et à y lire ou à y écrire des données traitées ou à traiter selon l'invention.

Le bus interne de communication permet la communication et l'interopérabilité entre les différents éléments inclus dans le dispositif 700 ou reliés à lui. La représentation du bus interne n'est pas limitative et, notamment, le microprocesseur est susceptible de communiquer des instructions à tout élément du dispositif 700 directement ou par l'intermédiaire d'un autre élément du dispositif 700.

Le code exécutable de chaque programme permettant au dispositif programmable de mettre en oeuvre les processus selon l'invention, peut être stocké, par exemple, dans le disque dur 725 ou en mémoire morte 715.

Selon une variante, la carte mémoire 735 peut contenir des données, notamment une table de correspondance entre les événements détectés et les commandes pouvant être sollicitées, ainsi que le code exécutable des programmes précités qui, une fois lu par le dispositif 700, est stocké dans le disque dur 725.

Selon une autre variante, le code exécutable des programmes pourra être reçu, au moins partiellement, par l'intermédiaire de la première interface de communication 740, pour être stocké de façon identique à celle décrite précédemment.

De manière plus générale, le ou les programmes pourront être chargés dans un des moyens de stockage du dispositif 700 avant d'être exécutés.

Le microprocesseur 710 va commander et diriger l'exécution des instructions ou portions de code logiciel du ou des programmes selon l'invention, instructions qui sont stockées dans le disque dur 725 ou dans la mémoire morte 715 ou bien dans les autres éléments de stockage précités. Lors de la mise sous tension, le ou les programmes qui sont stockés dans une mémoire non volatile, par exemple le disque dur 725 ou la mémoire morte 715, sont transférés dans la mémoire vive 720 qui contient alors le code exécutable du ou des programmes selon l'invention, ainsi que des registres pour mémoriser les variables et paramètres nécessaires à la mise en oeuvre de l'invention.

L'appareil de communication comportant le dispositif selon l'invention peut également être un appareil programmé. Cet appareil contient alors le code du ou des programmes informatiques par exemple figé dans un circuit intégré à application spécifique, aussi appelé ASIC (acronyme *d'Application-Specific Integrated Circuit* en terminologie anglo-saxonne).

Naturellement, pour satisfaire des besoins spécifiques, une personne compétente dans le domaine de l'invention pourra appliquer des modifications dans la description précédente.

## Revendications

1. Procédé de concentration d'au moins deux messages émis par au moins deux émetteurs distincts dans un réseau de communication auquel sont reliés lesdits au moins deux émetteurs et au moins un destinataire d'au moins une donnée utile contenue dans chacun desdits au moins deux messages, le procédé étant **caractérisé en ce qu'**il comprend les étapes suivantes,
- réception (605, 635) desdits au moins deux messages ;
- extraction desdites au moins une donnée utile contenue dans chacun desdits au moins deux messages ;
- construction (620) d'au moins une trame de concentration comprenant lesdites données utiles extraites et au moins une information permettant d'identifier ledit au moins un destinataire ; et,
- émission (650) de ladite au moins une trame de concentration, la taille de ladite au moins une trame de concentration étant inférieure à la taille maximale des paquets de données échangés dans ledit réseau de communication.

2. Procédé selon la revendication 1 comprenant en outre les étapes suivantes,
- configuration (600) du dispositif mettant en oeuvre le procédé pour mémoriser les identifiants des messages à concentrer et l'adresse dudit au moins un destinataire ; et,
- vérification de la validité desdits au moins deux messages reçus.

3. Procédé selon la revendication 1 ou la revendication 2 comprenant en outre une étape d'ouverture d'une fenêtre de concentration dont la taille est prédéterminée, ladite fenêtre de concentration étant ouverte lors de la réception du premier desdits au moins deux messages, ladite au moins une trame de concentration étant transmise à l'expiration de ladite fenêtre de concentration si au moins l'un desdits au moins deux messages n'est pas reçu.

4. Procédé selon l'une quelconque des revendications précédentes selon lequel ladite au moins une trame de concentration comprend un indicateur de statut, le procédé comprenant une étape d'évaluation dudit statut.

5. Procédé selon l'une quelconque des revendications précédentes selon lequel le procédé est mis en oeuvre dans l'un desdits au moins deux émetteurs ou dans un dispositif distinct desdits au moins deux émetteurs et dudit au moins un destinataire.

6. Procédé selon l'une quelconque des revendications 1 à 5 selon lequel ledit réseau de communication est un réseau de type Ethernet, lesdits au moins deux messages et ladite au moins une trame de concentration étant conformes au protocole UDP.

7. Procédé de simulation de l'intégration d'une pluralités de composants dans un réseau de communication comprenant au moins un système de gestion de simulation et au moins deux cartes d'extension de type entrée/sortie auxquelles est reliée ladite pluralité de composants, ledit procédé comprenant une étape de concentration d'au moins deux messages à destination dudit au moins un système de gestion de simulation, lesdits au moins deux messages étant émis par lesdites au moins deux cartes d'extension, ladite étape de concentration étant conforme à l'une quelconque des revendications précédentes.

8. Programme d'ordinateur comprenant des instructions adaptées à la mise en oeuvre de chacune des étapes du procédé selon l'une quelconque des revendications précédentes lorsque ledit programme est exécuté sur un ordinateur.

9. Dispositif comprenant des moyens adaptés à la mise en oeuvre de chacune des étapes du procédé selon l'une quelconque des revendications 1 à7.

10. Equipement comprenant au moins une carte d'extension de type entrée/sortie, au moins une interface réseau et au moins un dispositif selon la revendication précédente.
